# EUROPEAN PATENT APPLICATION

(11) **EP 2 482 281 A1**
(43) Date of publication of application: **01.08.2012**
(21) Application number: 12002276.9
(22) Date of filing: 30.01.2009
(51) Int. Cl.: G11B 19/12, G11B 27/24, G11B 27/32

(54) **Method for judging optical disc, optical disc device and program**

(30) Priority: 31.01.2008 JP 2008020366; 31.01.2008 JP 2008020369
(62) Divisional of application: 09705616.2
(71) Applicant: JVC KENWOOD Corporation, Yokohama-shi, Kanagawa 221-0022 (JP)
(72) Inventor: Fukumoto, Akihiro, Machida-shi Tokyo 194-0212 (JP)
(74) Representative: Leinweber & Zimmermann

(57) **Abstract**

Provided is a method for easily judging that a disc is an optical disc that conforms to the DVD Download standards, without generating malfunction. A Wobble signal is detected in a data zone (21) of an optical disc (YES in a step (S2)), CSS information is detected from a lead-in zone (20) of the optical disc (YES in step (S5)), and when attribute information, which is of the optical disc and recorded in the lead-in zone (20) of the optical disc, is further read and the disc is recognized as a DVD-ROM (YES in a step (S7)), the optical disc is judged as an optical disc that conforms to the DVD Download standards.

## Description

### TECHNICAL FIELD

The present invention relates to a method for judging an optical disc, an optical disc device, and a program.

### BACKGROUND ART

With various standards already created for DVD (Digital Versatile Disc, hereinafter referred to as DVD) as an optical disc, new standards are still set in accordance with new varieties of DVD (for example, see Non-Patent Document 1). For this reason, the type of DVD needs to be judged when a DVD is loaded into a DVD reproducing device or a DVD recording device. As techniques for judging the type of DVD, those disclosed in Patent Document 1 and Patent Document 2 are known.
Non-Patent Document 1: DVD Forum Home Page (http://www.dvdforum.gr. jp/), Current DVD (http://www.dvdforum.org/mi-current_DVD.htm)
Patent Document 1: Japanese Patent Application Laid-Open No. 2004-246990
Patent Document 2: Japanese Patent Application Laid-Open No. 2000-315355

### DISCLOSURE OF THE INVENTION

### PROBLEMS TO BE SOLVED BY THE INVENTION

As described in Non-Patent Document 1, DVD Download standards are proposed as new standards of DVD. The DVD Download standards are based on, instead of the assumption of a conventional providing system in which a content supplier directly provides DVDs which have content recorded thereon for end consumers (MOD: Manufacturing On Demand), the assumptions that a distributor or the like which is authorized by a content supplier records content on DVDs and supplies them to end consumers (MOD-2) or that a distributor burns content on a DVD which is purchased by an end consumer and has nothing recorded yet (hereinafter, this kind of DVD will be referred to as "blank disc") over the counter for the end consumer (EST: Electronic Sell Through).

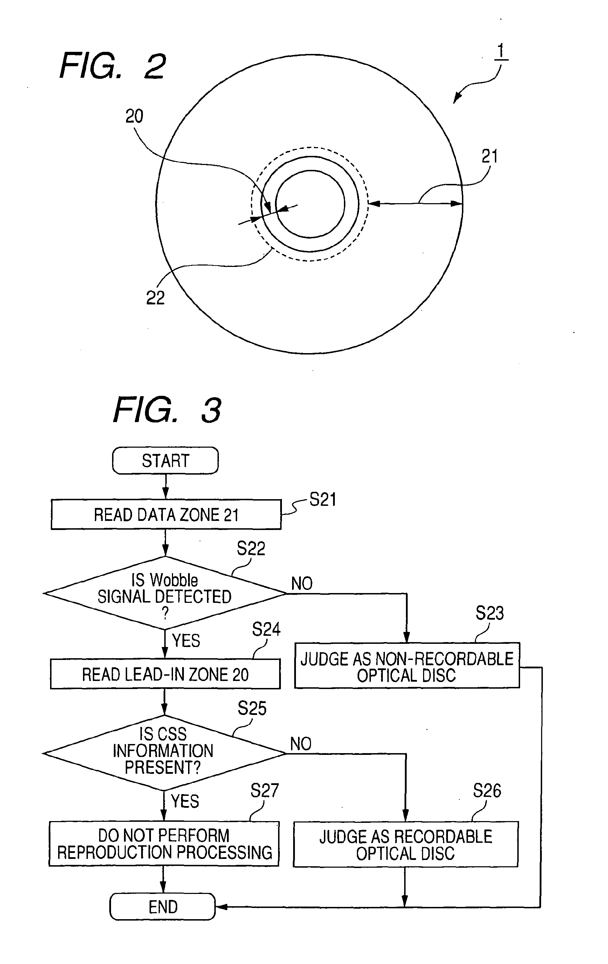

FIG. 2 is a diagram showing sections on a logical format of an optical disc 1. The optical disc 1 is separated into a lead-in zone 20 in which attribute information or the like is recorded, and a data zone 21. The lead-in zone 20 further includes a control data zone (not shown) in which control information about the optical disc 1 is recorded. The data zone 21 is an area in which content data is recorded. In the data zone 21, address administration is performed on a proper logical format from the start address 22 of the logical address toward the outer circumference.

An optical disc that conforms to the DVD Download standards has CSS (Content Scramble System: hereinafter referred to as CSS) information recorded in the control data zone. The CSS information verifies that the content data which has been encrypted and recorded on an optical disc 1 is licensed by the content provider or the distributor thereof. Although the CSS information is recorded onto the optical disc at different timings depending on which of the above-mentioned assumptions being taken, it is recorded in the lead-in zone 20 of the optical disc 1 or the blank disc which has the content data recorded thereon, for preventing the content data from illegally copied. Incidentally, in the control data zone of each one of the conventional DVD family (DVD-ROM, DVD-R, DVD-RW, and the like), four items of information below are recorded:
1) Book Type (the logical type of the optical disc, i.e., book type, is recorded)
2) Compatible Part Version (compatible versions are recorded)
3) Disc Identifier (name of cryptographic process and the like used in the optical disc are recorded)
4) Maximum Recorded Address (address of the end of content data recorded is recorded)

In the optical disc that conforms to the DVD Download standards, "DVD-ROM" is recorded for "Book Type" and "DVD Download Disc for CSS Managed Recording", which is the above-mentioned CSS information, is recorded for "Disc identifier", without fail.

If the optical disc that conforms to the DVD Download standards is subjected to the disc judging method disclosed in Patent Document 1 or Patent Document 2 or loaded into a conventional optical disc, the optical disc is processed as described below, thereby unable to be reproduced.

FIG. 3 is a flowchart showing the process of conventional disc judgment. When an optical disc is loaded into an optical disc device (not shown) (START), the optical disc device reads the data zone 21 of the optical disc (step S21). Then, the optical disc device detects a tracking error resulted from a Wobble signal by using a push-pull detection approach to perform physical disc discrimination on the optical disc (step S22). If the Wobble signal is not detected in step S22 (No), the optical disc device judges that the optical disc is a non-recordable optical disc (for example, a DVD-ROM) (step S23). On the other hand, when the Wobble signal is detected in step S22 (YES), the optical disc device judges that the optical disc is a recordable optical disc (for example, a DVD-R), thereby further reading lead-in information (step S24). Then, the optical disc device judges whether the lead-in information contains the CSS information or not (step S25). If the lead-in information does not contain the CSS information in step S25 (No), the optical disc device judges that the optical disc is a recordable optical disc and, if the user requests reproduction, proceeds to the reproduction operation, and if the user requests recording, proceeds to the recording operation or the like (step S26). On the other hand, when the lead-in information contains the CSS information in step S25 (Yes), the optical disc device does not perform reproduction processing of the optical disc (step S27).

If the optical disc that conforms to the DVD Download standards is loaded into an optical disc device which is a conventional recording machine for performing the above-mentioned judgment, the judgment below is performed. That is, because the Wobble signal is detected in step S22 (YES), the optical disc device judges that the optical disc that conforms to the DVD Download standards is physically a recordable optical disc. Then, the optical disc device reads the lead-in zone in step S24 to detect whether the CSS information is present or not (step S25). As a result, CSS information is detected, even though the optical disc that conforms to the DVD Download standards is physically judged to be a recordable optical disc. Therefore, the optical disc device does not perform reproduction processing of the optical disc that conforms to the DVD Download standards (step S27). The reproduction processing is not performed in step S27, because, in accordance with the CSS compliance rule, an optical disc whose physical recognition contradicts whose logical recognition is suspected to be an illegal copy disc which is a recordable optical disc recording content data that must be recorded on a non-recordable optical disc. That is, if the optical disc that conforms to the DVD Download standards is loaded into a conventional optical disc device, the optical disc is not recognized as a legitimate optical disc, which causes a problem in that it may generate malfunction or it cannot be reproduced.

The present invention solves the above-mentioned problems and has an object of providing an optical disc judging method, an optical disc device, and a program which can easily judge that a disc is an optical disc that conforms to the DVD Download standards, without generating a malfunction.

### MEANS FOR SOLVING THE PROBLEMS

According to the first aspect of the present invention, in order to achieve the above-mentioned object, the present invention is an optical disc judging method that judges the type of a loaded optical disc, **characterized in that** the optical disc is judged as an optical disc that conforms to the DVD Download standards when the optical disc is recognized as a DVD-ROM by detecting a Wobble signal in a data zone of the optical disc, detecting CSS information in a lead-in zone of the optical disc, and further reading attribute information about the optical disc which is recorded in the lead-in zone of the optical disc.

The Wobble signal may be detected as a tracking error signal that is detected by using a push-pull detection approach.

According to the second aspect of the present invention, the present invention is an optical disc device that records information on an optical disc and/or reproduces the information recorded on the optical disc, characterized by comprising: a first identification means which identifies a Wobble signal in a data zone of the optical disc; a second identification means which identifies CSS information recorded in a lead-in zone of the optical disc; a third identification means which identifies whether the optical disc is a DVD-ROM or not by reading attribute information about the optical disc; and a disc discrimination means which judges the optical disc as an optical disc that conforms to the DVD Download standards when a signal indicating that the Wobble signal is detected is output from the first identification means, a signal indicating that the CSS information is identified is output from the second identification means, and the third identification means identifies that the optical disc is a DVD-ROM.

A program for causing an information processing device to function as the above-mentioned optical disc device when the program is installed in the information processing device may also be provided.

According to the third aspect of the present invention, the present invention is an optical disc judging method that judges the type of a loaded optical disc, **characterized in that** the optical disc is judged as an optical disc that conforms to the DVD Download standards when a Wobble signal is detected in a data zone of the optical disc, the signal level of the Wobble signal does not exceed a predetermined threshold in judgment as to whether the level of the Wobble signal does not exceed the predetermined threshold or not, and CSS information is detected in a lead-in zone of the optical disc.

The Wobble signal may be detected as a tracking error signal that is detected by using a push-pull detection approach.

The optical disc may be judged as an optical disc that conforms to the DVD Download standards when attribute information about the optical disc which is recorded in a lead-in zone of the optical disc is further read and the optical disc is recognized as a DVD-ROM.

According to the fourth aspect of the present invention, the present invention is an optical disc device that records information on an optical disc and/or reproduces the information recorded on the optical disc, characterized by comprising: a first identification means which identifies a Wobble signal in a data zone of the optical disc; a level judgment means which judges whether the Wobble signal level does not exceed a predetermined threshold or not; a second identification means which identifies CSS information recorded in a lead-in zone of the optical disc; and a disc discrimination means which judges the optical disc as an optical disc that conforms to the DVD Download standards when a signal indicating that the Wobble signal is identified is output from the first identification means, a signal indicating that the level of the Wobble signal does not exceed the predetermined threshold is output from the level judgment means, and a signal indicating that the CSS information is identified is output from the second identification means.

The present invention may comprise a third identification means which identifies whether the optical disc is a DVD-ROM or not from attribute information about the optical disc which is recorded in a lead-in zone, wherein the disc discrimination means judges that the optical disc is an optical disc that conforms to the DVD Download standards when the third identification means identifies that the optical disc is a DVD-ROM.

Finally, the present invention provides for a program for causing the information processing device to function as the optical disc device described above, when the program is installed in the information processing device.

### EFFECTS OF THE INVENTION

According to the present invention, an optical disc can be easily judged as an optical disc that conforms to DVD Download standards without generating malfunctions.

### BRIEF DESCRIPTION OF THE DRAWINGS

FIG. 1 is a diagram showing a partial configuration of an optical disc device of an embodiment of the present invention;
FIG. 2 is a diagram showing sections on a logical format of an optical disc;
FIG. 3 is a flowchart showing the process of conventional disc judgment;
FIG. 4 is a flowchart showing the process of the first embodiment of the present invention; and
FIG. 5 is a flowchart showing the process of the second embodiment of the present invention.

### DESCRIPTION OF SYMBOLS

1 optical disc, 2 motor, 3 optical pickup,
4 signal processing/servo control unit (first identification means, second identification means, third identification means)
5 disc discrimination unit (disc discrimination means), 20 lead-in zone
21 data zone, 22 start address of logical address

### BEST MODES FOR CARRYING OUT THE INVENTION

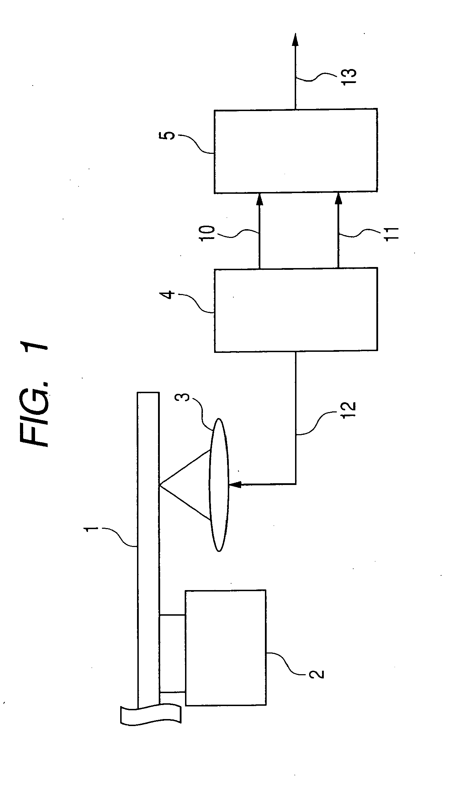

Embodiments of the present invention will be described below with reference to the drawings. FIG. 1 shows a partial configuration of an optical disc device. The optical disc device has a motor 2, an optical pickup 3, a signal processing/servo control unit 4, and a disc discrimination unit 5. The optical disc device is a device that reads data recorded on an optical disc 1 via the optical pickup 3 by rotating the loaded optical disc 1 with the motor 2.

The components of the optical disc device will be described below. The motor 2 is for stably rotating the optical disc 1, and made of a spindle motor or the like, for example. The optical pickup 3 has a function of reading a signal from the optical disc 1. The optical pickup 3 is connected to the signal processing/servo control unit 4 which performs servo control. The signal processing/servo control unit 4 has a signal processing function (arrow 10 in FIG. 1) of processing a signal read via the optical pickup 3 and outputting the detected result to the disc discrimination unit 5; and a signal processing function (arrow 11 in FIG. 1) of processing a signal read from the lead-in zone 20 and outputting the result to the disc discrimination unit 5, as well as outputting a signal read from the data zone 21. The signal processing/servo control unit 4 has a servo control function (arrow 12 in FIG. 1) of servo controlling the optical pickup 3 in focusing and tracking based on the signals read. The signal processing function specifically includes functions of detecting/outputting CSS information, detecting/outputting other control signals, and detecting/outputting a tracking error signal. The signal processing/servo control unit 4 has functions of RF front-end and a digital signal processing, and servo controlling functions of providing servo control signals for a focus servo actuator (not shown) and a tracking servo actuator (now shown) which are actuators of the optical pickup 3. The signal processing/servo control unit 4 functions as a first identification means, a second identification means, and a third identification means by an aspect of having a function of identifying a Wobble signal in the data zone 21 of the optical disc 1, an aspect of having a function of identifying the CSS information recorded in the lead-in zone 20 of the optical disc 1, and an aspect of identifying whether the optical disc 1 is a DVD-ROM or not from the attribute information recorded in the lead-in zone 20, respectively.

The disc discrimination unit 5 as a disc discrimination means is a disc discrimination means (arrow 13 in FIG. 1) which receives a CSS detection signal and a TE detection signal (tracking error signal) output from the signal processing/servo control unit 4, judges the type of the optical disc 1, and outputs the judgment result. According to the judgment result, the optical disc device can judge whether the loaded optical disc 1 is the optical disc 1 that conforms to the DVD Download standards or not and stop the reading operation on the optical disc 1 to perform any of the reproduction operation, stop reproduction operation, and ejection operation on the optical disc 1.

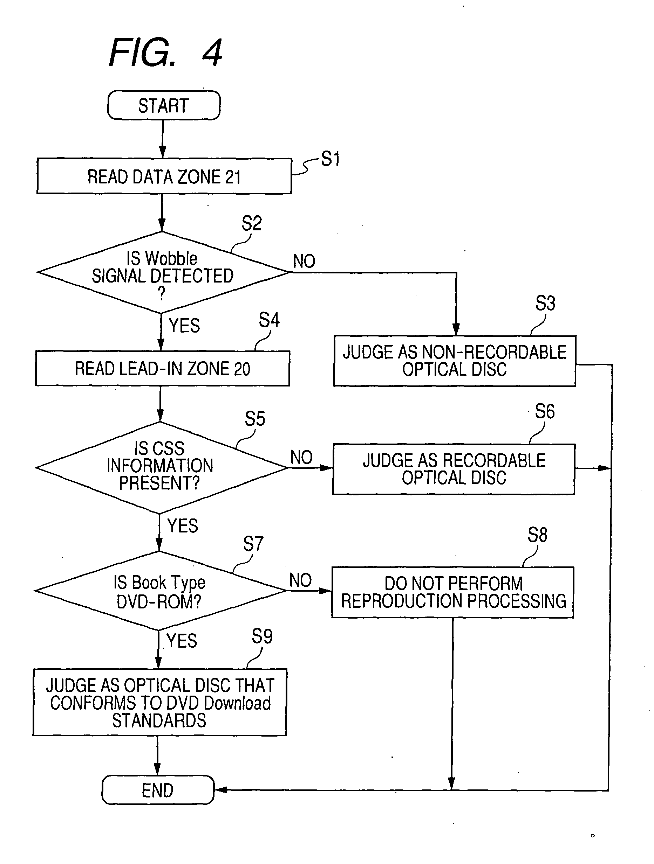

Now, a first embodiment of the present invention will be described with reference to the flowchart shown in FIG. 4. FIG. 4 is a flowchart showing the process of, after the loaded optical disc 1 is judged as a DVD, judging that it is an optical disc 1 that conforms to DVD Download standards.

When the optical disc 1 is loaded into an optical disc device (not shown) (START), the optical pickup 3 reads the data zone 21 of the optical disc 1 (step S1).

The signal processing/servo control unit 4 detects a tracking error signal by using a push-pull detection approach from the signals read via the optical pickup 3, and judges whether the tracking error signal results from a Wobble groove or not according to the amplitude of the detected tracking error signal, as the first identification means (step S2). If a tracking error signal that results from a Wobble groove is not obtained here (No), i.e., only a weak tracking error signal can be obtained, for example, the signal processing/servo control unit 4 judges that the optical disc 1 is a non-recordable optical disc 1 because it detects tracking error signals only with respect to the pits instead of detecting the tracking error signals by using a push-pull detection approach (step 3). When a tracking error signal that results from a Wobble groove is obtained in step S2 (Yes), the signal processing/servo control unit 4 judges that the optical disc 1 is a recordable optical disc 1 having a Wobble groove because it detects tracking error signals that reflected from the Wobble groove.

When the signal processing/servo control unit 4 judges Yes in step S2, it causes the optical pickup 3 to seek the lead-in zone 20 to read the attribute information about the optical disc 1 (step S4). Then, the signal processing/servo control unit 4 judges whether the CSS information is detected from the signals read from the lead-in zone 20 or not, as the second identification means (step S5). If the CSS information is not detected in the lead-in zone 20 (No), the signal processing/servo control unit 4 judges that it is the recordable optical disc 1 (step S6). On the other hand, when the CSS information is detected in the lead-in zone 20 (Yes), the signal processing/servo control unit 4 further judges whether Book Type in the CSS information is DVD-ROM or not, as the third identification means (step S7). If Book Type in the CSS information is those other than DVD-ROM (No), the signal processing/servo control unit 4 does not perform reproduction processing of the optical disc 1 (step S8). When Book Type in the CSS information is DVD-ROM (Yes), the signal processing/servo control unit 4 judges that the optical disc 1 is the optical disc 1 that conforms to the DVD Download standards (step S9).

With this judging method, it can be easily judged that the loaded optical disc 1 is the optical disc 1 that conforms to the DVD Download standards, without generating malfunction.

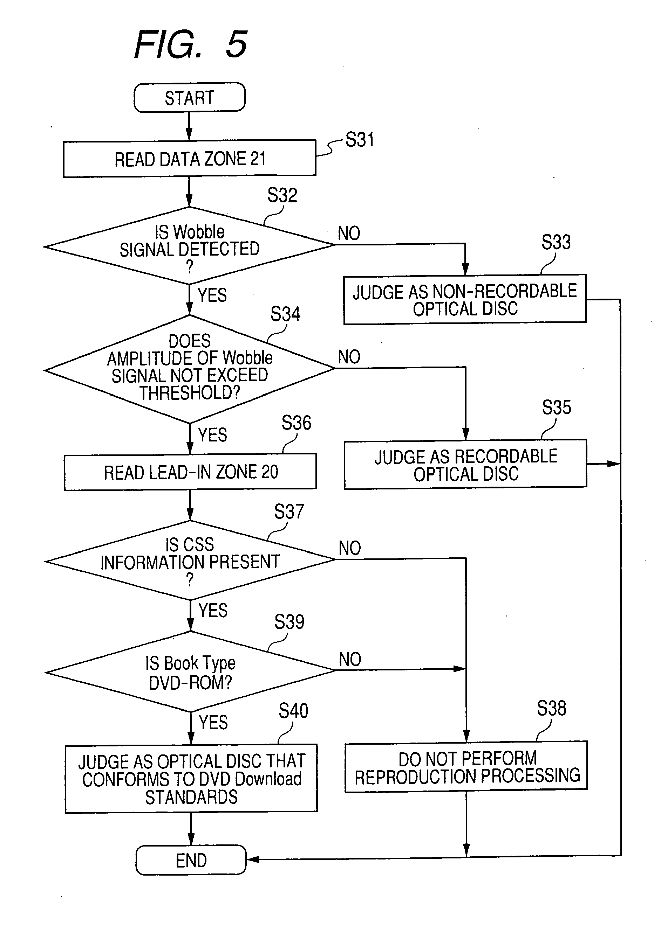

Now, a second embodiment of the present invention will be described with reference to the flowchart shown in FIG. 5. FIG. 5 is, as FIG. 4, a flowchart showing the process of, after the loaded optical disc 1 is judged as a DVD, judging that it is an optical disc 1 that conforms to DVD Download standards.

When the optical disc 1 is loaded into an optical disc device (not shown) (START), the optical pickup 3 reads the data zone 21 of the optical disc 1 (step S31).

The signal processing/servo control unit 4 detects a tracking error signal by using a push-pull detection approach from the signals read via the optical pickup 3, and judges whether the tracking error signal results from a Wobble groove or not according to the amplitude of the detected tracking error signal, as the first identification means (step S32). If a tracking error signal that results from a Wobble groove is not obtained here (No), i.e., only a weak tracking error signal can be obtained, for example, the signal processing/servo control unit 4 judges that the optical disc 1 is a non-recordable optical disc 1 because it detects tracking error signals only with respect to the pits instead of detecting the tracking error signals by using a push-pull detection approach (step S33). When a tracking error signal that results from a Wobble groove is obtained in step S32 (Yes), the signal processing/servo control unit 4 judges whether the amplitude of the Wobble groove does not exceed a predetermined threshold or not (step S34). If the amplitude of the Wobble groove exceeds the predetermined threshold, i.e., larger than the predetermined threshold (No), the signal processing/servo control unit 4 judges that the optical disc 1 is a recordable optical disc 1 (step S35). Specifically, it is judged as the optical disc that has a Wobble groove, such as a DVD-R, a DVD+R, a DVD-RW, a DVD+RW, and the like. On the other hand, when the amplitude of the Wobble groove does not exceed the predetermined threshold (Yes), it can be determined that the detected Wobble groove of the optical disc 1 is the Wobble groove provided for the optical disc 1 that conforms to the DVD Download standards; thus, the signal processing/servo control unit 4 proceeds to cause the optical pickup 3 to seek the lead-in zone 20 to read the attribute information about the optical disc 1 (step S36).

Whether the amplitude of the Wobble groove does not exceed the predetermined threshold or not is judged in step S34, because the detected Wobble frequencies are clearly different between the optical disc 1 that conforms to the DVD Download standards and the optical discs 1 that conform to the other existing DVD standards. Specifically, the reason for the judgment is to take advantage of such a feature of the Wobble signal of the optical disc 1 that conforms to the DVD Download standards as the Wobble signal thereof detected through a bandpass filter has a clearly smaller amplitude than those of the optical discs 1 that conform to the other existing DVD standards detected in the same manner, since a conventional optical disc device uses a bandpass filter to detect a frequency of a Wobble groove (Wobble frequency) which is specific to the recordable optical disc 1. The expression "does not exceed a predetermined threshold" here generally intends the value not less than the amplitude of a weak tracking error signal which can be obtained from a non-recordable optical disc that has no Wobble groove by using a push-pull detection approach, although the value cannot be specified uniformly because it differs among the optical disc devices.

The signal processing/servo control unit 4 judges whether the CSS information is detected from the signals read from the lead-in zone 20 or not, as the second identification means (step S37). If the CSS information is not detected in the lead-in zone 20 (No), the signal processing/servo control unit 4 does not perform reproduction processing of the optical disc 1 (step S38). On the other hand, when the CSS information is detected in the lead-in zone 20 (Yes), the signal processing/servo control unit 4 further judges whether Book Type of the CSS information is DVD-ROM or not, as the third identification means (step S39). If Book Type of the CSS information is those other than DVD-ROM (No), the signal processing/servo control unit 4 does not perform reproduction processing of the optical disc 1 (step S38). When Book Type of the CSS information is DVD-ROM (Yes), the signal processing/servo control unit 4 judges that the optical disc 1 is the optical disc 1 that conforms to the DVD Download standards (step S40).

With this judging method, it can be easily judged that the loaded optical disc 1 is the optical disc 1 that conforms to the DVD Download standards, without generating malfunction.

Although the second embodiment of the present invention has been described, various modifications are possible for the present invention without departing from the spirit of the invention. For example, in the above-mentioned discriminating method, the optical disc 1 is judged as the optical disc 1 that conforms to the DVD Download standards when it is judged YES in step S39; though, when it is judged Yes in step S37, the operation can be transferred to step S40 where the optical disc 1 is discriminated as the optical disc 1 that conforms to the DVD Download standards without checking Book Type recorded in the lead-in zone 20. This discriminating method can eliminate the processing step (step S38) of checking the attribute information (Book Type) recorded in the lead-in zone 20, thereby further reducing the influence on the discriminating program and other control programs caused by any change made in a conventional discrimination processing the optical disc device employs.

The object of the present invention can be realized by installing a program according to the above-mentioned discrimination processing in an information processing device. Specifically, when a program according to the present invention is installed as a part of optical disc judging software of the conventional DVD reproducing device, it can be easily judged that the loaded optical disc 1 is the optical disc 1 that conforms to the DVD Download standards, without generating malfunction or the like. This kind of program can be installed in the information processing device over a network. Although the above-mentioned embodiments have been described by taking an example of a DVD reproducing device among optical disc devices, they can also be implemented in the DVD recording device.

### INDUSTRIAL APPLICABILITY

The present invention can be applied to all kinds of optical disc devices. The present invention can be particularly used in conventional DVD reproducing devices or DVD recording devices.

## Claims

1. An optical disc device that records information on an optical disc (1) and/or reproduces the information recorded on the optical disc (1), **characterized by** comprising:
first identification means (4) which identifies a Wobble signal in a data zone (21) of the optical disc (1);
second identification means (4) which identifies CSS information recorded in a lead-in zone (20) of the optical disc (1);
third identification means (4) which identifies whether the optical disc (1) is a DVD-ROM or not by reading attribute information about the optical disc (1); and
disc discrimination means (5) which judges the optical disc (1) as an optical disc (1) that conforms to the DVD Download standards when a signal indicating that the Wobble signal is detected is output from the first identification means (4), a signal indicating that the CSS information is identified is output from the second identification means (4), and the third identification means (4) identifies that the optical disc (1) is a DVD-ROM.

2. A program for causing an information processing device to function as the optical disc device according to claim 1 when the program is installed in the information processing device.
